# EUROPEAN PATENT SPECIFICATION

(11) **EP 0 404 224 B1**
(45) Date of publication and mention of the grant of the patent: **01.09.1993**
(21) Application number: 90201515.5
(22) Date of filing: 12.06.1990
(51) Int. Cl.: F16G 13/06

(54) **Chain link formed of polymeric material**
Kettenglied aus Polymer-Material
Maillon de chaîne en matériau polymère

(30) Priority: 12.06.1989 NL 8901483
(43) Date of publication of application: 27.12.1990
(73) Proprietor: Stork Conveyor Systems B.V., 4941 VL Raamsdonksveer (NL)
(72) Inventor: Van Loon, Mathée Andrianus Ymard, NL-5151 ND Drunen (NL)
(74) Representative: Boelsma, Gerben Harm, Ir.

(56) References cited:
- FR-A- 1 387 222
- GB-A- 981 618
- GB-A- 2 047 383
- US-A- 2 589 355
- US-A- 4 271 663
- US-A- 4 355 502
- SOVIET INVENTIONS ILLUSTRATED, week C17, 4th June 1980, section Q64, abstract no. D8199C/17, Derwent Publications Ltd, London, GB; & SU-A-681 271 (VNIIZEMMASH SOIL EX) 28-08-1979

## Description

The invention relates to a chain link, more particularly for a conveyor chain, comprising two strip-shaped webs of polymeric material, a pivot pin adjacent each link end to hold the latter in mutual spaced and parallel relationship, wherein said pivot pins each consist of a core portion extending from one web and integrally formed therewith, which core portion slidingly fits in a tubular portion extending from the opposite web and formed integrally therewith.

A chain link of this type is disclosed in "Soviet Inventions Illustrated, week C17, 4th June 1980, Section Q64, Abstract No. D8199C/17, Derwent Publications Ltd, Londen".

Chain links of this type are intended to be interconnected and composed to a chain with the intermediary of connecting links, the ends of which are shaped to fit between the webs of the respective chain links and engage with a pivot eye around the pivot pin at the respective end of the chain links.

Typically, such a chain link is suitable for being formed of a polymeric material, although polymeric material has not been explicitly mentioned in the prior art document above referred to. Polymeric material is also the preferred material e.g. when the chain is to be used in food industry. Polymeric material, in effect, is advantageous in such cases due to the possibilities for cleaning and generally due to its resistance to affection in an agressive environment. In this respect even stainless steel is by far inadequate in comparison with polymeric material. On the other hand, however, polymeric material usually has a lower strength than metal, in particular steel.

The invention therefore aims at modifying and improving the well-known link such, that its strength is substantially increased in spite of the relative low tensile strength of the polymeric material of which it is to be formed.

According to the invention this aim is achieved in that the tubular portion engages at its free end with a sliding fit into an annular recess formed in the web around the base of the respective core portion, whereas the core portion is provided at its free end with locking means.

In a chain link so formed, whereby the tubular portion and the core portion are each integrally formed with one of the two webs, there is a connection of high strength between both ends of the tubular portions and the two webs of the assembled chain link, namely at one end because the tubular portion is integrally formed with the respective web, and at the other end, because at that end the tubular portion is snugly engaged into a recessed annular cavity of the respective web. Moreover the number of parts of the chain link is still limited to two.

It is to be noted that NL-A-284.996 discloses a transmission chain, which is completely formed of polymeric material and with which tubular portions of the links are each integrally formed with a web of the link. With this link the chain link halves are also held together by pin-shaped core portions. These core portions, however, do not form part of the proper link, but are integrally formed with double webbed connecting links. The tubular portions do not engage into cavities recessed in the opposing web and are neither functioning as a pivot pin, but as guide means for the teeth of sprockets. In this case the cross-section of the pin-shaped core portions is determining the strength of the chain.

In a preferred embodiment of the invention the webs of the chain link each comprise a tubular portion and a core portion. As a result of this both webs are identically formed, which favourably influences the manufacturing cost of the chain link.

According to a further feature of the invention the locking means at the free end of the core portion are constituted by a cam formed at that end, which normally extends slightly beyond the circumference of the core portion, but is caused to resiliently move radially inwardly when inserting said portion into the tubular portion and - in the fully inserted position - resiliently engages a shoulder, forming the complementary locking means.

The invention will be hereinafter further described by way of example with reference to the drawing.
Fig. 1 is a perspective view of a chain link according to the invention, together with two connecting links;
fig. 2 is a perspective view of the chain link according to the invention, with the two link halves being shown in disassembled condition, and
fig. 3 is a cross-sectional view along the line III - III of fig. 1.

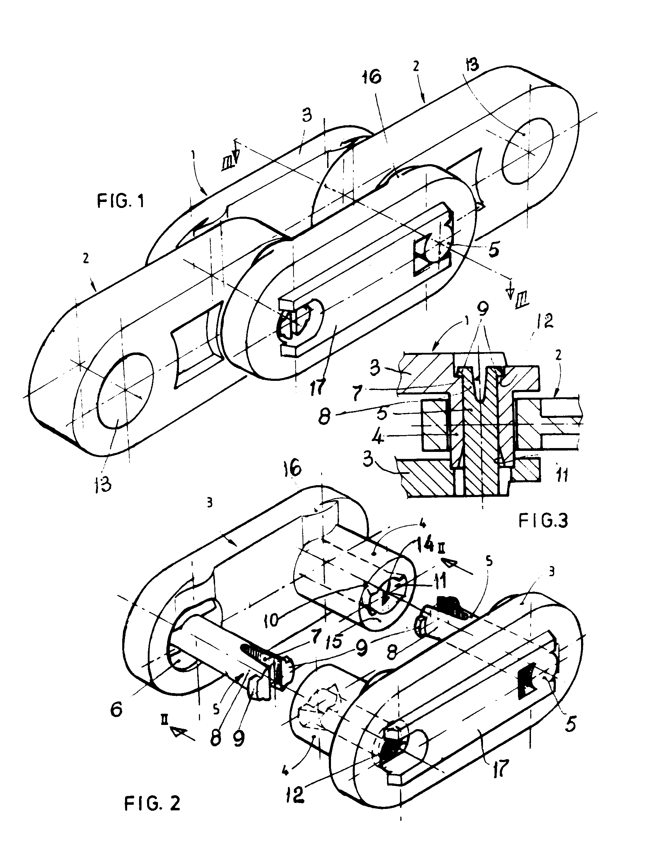

With reference to fig. 1 the chain link according to the invention has been indicated at 1, whereas a pair of connecting links, engaging therewith, are indicated at 2. It will be clear that a number of chain links 1 may be joined to a chain of the desired length by means of a corresponding number of connecting links 2. In the embodiment shown in fig. 1 the chain is e.g. adapted to be guided over sprockets with horizontal axes and to function as conveyor chain.

The chain link according to the invention comprises a pair of webs 3, which are each provided with a tubular portion 4, extending perpendicularly from the plane of said web, and of a pin-shaped projection 5 respectively. The pin-shaped portion 5 has a diameter which corresponds with the inner diameter of the tubular portion 4, so that the pin-shaped portion 5 of one chain link half fits slidingly within the tubular portion of the second chain link half. Around the base of the pin-shaped portion 5 an annular recess 6 is formed on the inner side of the respective web 3, the diameter of which corresponds with the outer diameter of the tubular portion 4.

The pin-shaped portion 5 has an axial slit 7 at its free end, due to which two legs 8 are formed which slightly diverge towards the free pin end and each end in a slightly outwardly projecting cam 9, the function of which will appear hereinafter.

At the free end 10 of the tubular portion 4 a pair of bevels 11 are formed at locations which correspond with the locations of the cams at the free end of the pin-shaped portion 5 of the other chain link half.

On the outer side of each of the webs 3, around the axis of the respective tubular portion 4, a shoulder 12 is formed, which cooperates with the cams 9 of the pin-shaped portion 5 on the opposite web.

When composing a chain from a number of chain links of the invention and an equal number of connecting links 2, the following procedure is applied. At first the tubular portions 4 of the two halves of each link 1 are inserted through an eye 13 of a connecting link 2, after which the two link halves are fit into one another in a direction perpendicular to the longitudinal direction of the chain to be composed. For this purpose the lower link half as shown in fig. 2 is moved in the direction of arrow II relative to the upper link half. The cams 9 of the pin-shaped portions 5 will first engage the bevels 11 at the free end of the opposite tubular portions 4. The bevels 11 are functioning as cam guiding surfaces, which urge the cams 9 to temporarily contract to within the diameter of the bore 14 of the tubular portions 4.

At the end of the inserting procedure the tubular portions 4 are abutting with the end phases 15 against the bottom surfaces of the recesses 6, whereas the cams 9 have been allowed to return to the initial position and engage behind the shoulders indicated at 12.

Fig. 3 illustrates the solid interconnection between the two halves of the chain link. More particularly it will be understood that the tubular portions 4 have been fixedly connected to both of the webs 3.

As is further shown in fig. 3, the thickness of the connecting links 2 is smaller than the spacing between the webs 3, whereas the pivot pin formed by the tubular portion 4 has a certain clearance within the respective pivot eye 13. As a result of this the connecting links 2 are allowed to deviate through a certain angle with respect to the longitudinal axis of the chain link in the horizontal plane. On the inner side of the webs 3 convexly formed projections 16 are provided, over which the connecting links 6 may roll when performing such lateral deviating movements. A chain composed of chain links according to this invention may thus be guided through horizontal curves. On the outer side of the webs 3 projections 17 are provided to laterally support the chain when moving through such curves.

The chain link described hereinabove, as well as the connecting links 2 may be readily formed of one piece of polymeric material, e.g. polyamide, making use of common moulding technics.

## Claims

1. A chain link (1), more particularly for a conveyor chain, comprising two strip-shaped webs of polymeric material (3), a pivot pin (4, 5) adjacent each link end to hold the latter in mutual spaced and parallel relationship, wherein said pivot pins (4, 5) each consist of a core portion (5) extending from one web (3) and integrally formed therewith, which core portion (5) slidingly fits in a tubular portion (4) extending from the opposite web (3) and formed integrally therewith, characterized in that the tubular portion (4) engages at its free end with a sliding fit into an annular recess (6) formed in the web (3) around the base of the respective core portion (5), whereas the core portion (5) is provided at its free end with locking means (9).

2. A chain link according to claim 1, characterized in that the locking means (9) at the free end of the core portion (5) are constituted by a cam (9) formed at the end, which normally extends slightly beyond the circumference of the core portion (5), but is caused to resiliently move radially inwardly when inserting said portion (5) into the tubular portion (4) and - in the fully inserted position - resiliently engages a shoulder (12), forming the complementary locking means.

3. A chain link according to claims 1-2, characterized in that on the inner side of the web (3) - on both sides of the tubular portions (4), at locations transversely to the longitudinal direction of the link (1) - convexly formed projections (16) are provided, over which pivoting connecting links (2) are allowed to deviate to both sides through a certain angle.

## Patentansprüche

1. Kettenglied (1), insbesondere für eine Förderkette, bestehend aus zwei streifenförmigen Wangen (3) aus Kunststoff, einem Gelenkbolzen (4, 5) in der Nähe jedes Glieds um die letzteren im Abstand und parallel zueinander zu halten, wobei die Gelenkbolzen (4, 5) je aus einem sich von einer (3) der Wangen erstreckenden und einstückig mit dieser gebildeten Kernstück (5) besteht, welcher Kernstück verschieblich in einem um der anderen Wange (3) erstreckenden und einstückig mit dieser geformten Rohrstück steckt, dadurch gekennzeichnet, dass das freie Ende des Rohrstückes (4) mit einer Schiebepassung in einer in der Wange (3) um den Fuss des betreffenden Kernstückes (5) geformten ringförmigen Aussparung (6) eingreift, während der Kernstück (5) an seinem freien Ende mit Sperrmitteln (9) versehen ist.

2. Kettenglied nach Anspruch 1, dadurch gekennzeichnet, dass die Sperrmittel (9) am freien Ende des Kernstückes (5) von einem am Ende geformten Nocken (4) gebildet werden, welcher normalerweise etwa ausserhalb des Umfanges des Kernstückes (5) augragt, sondern beim Einstecken des Kernstückes (5) in das Rohrstück (4) elastisch nach innen bewegt wird und sich im zusammengesteckten Zustand elastisch an einem das komplementäre Sperrmittel bildenden Schulter (12) anliegt.

3. Kettenglied nach Ansprüchen 1-2, dadurch gekennzeichnet, dass an der Innenseite der Wangen (3) - an beiden Seiten des Rohrstückes (4), in quer zur Längsrichtung des Glieds (1) verlaufenden Bereichengewölbte Vorsprünge (16) vorhanden sind, und dass gelenkig mit dem Kettenglied verbundenen Verbindungsglieder (2) über diese Vorsprünge über einen bestimmten Winkel zu beiden Seiten ausschwenken können.

## Revendications

1. Un maillon de chaîne (1), plus particulièrement pour une chaîne de convoyeur, comprenant deux rubans de matériau polymère formés de bandes (3), une aiguille pivot (4, 5) adjacente à chaque extrémité de maillon pour tenir ce dernier en relation parallèle et mutuelle espacée, dans lequel lesdites aiguilles pivot (4, 5) consistent chacune d'une partie centrale (5) s'étendant d'un ruban (3) et intégralement formé avec lui, laquelle partie centrale (5) s'adapte de façon coulissante dans une partie tubulaire (4) s'étendant à partir du ruban opposé (3) et formée intégralement avec celui-ci, caractérisé en ce que la partie tubulaire (4) s'engage à son extrémité libre une adaptation avec glissement dans un évidement annulaire (6) formé dans le ruban (3) autour de la base de partie centrale respective (5) tandis que la partie centrale (5) est munie à son extrémité libre d'un moyen de fermeture (9).

2. Un maillon de chaîne selon la revendication 1, caractérisé en ce que les moyens de fermeture (9) à l'extrémité libre de la portion centrale (5) sont constitués par une came (9) formée à l'extrémité, qui s'étend normalement légèrement derrière la circonférence de la portion centrale (5), mais qui peut bouger de façon résiliente vers l'intérieur quand on insère ladite partie (5) dans la partie tubulaire (4) et - dans la position complètement insérée - engage de façon résiliente dans un épaulement (12), formant les moyens de fermeture complémentaires.

3. Un maillon de chaîne selon les revendications 1-2, caractérisé en ce que le côté intérieur du ruban (3) - sur les deux côtés de la partie tubulaire (4), à des endroits transversalement à la direction longitudinale du maillon (1) - des projections formées de façon convexe (16) sont fournies, au-dessus desquelles les maillons (2) connectants et pivotants sont autorisés à dévier des deux côtés à travers un certain angle.
